# EUROPEAN PATENT APPLICATION

(11) **EP 3 352 532 A1**
(43) Date of publication of application: **25.07.2018**
(21) Application number: 16846184.6
(22) Date of filing: 17.08.2016
(51) Int. Cl.: H05B 37/02

(54) **ILLUMINATION CONTROL SYSTEM, ILLUMINATION CONTROL APPARATUS, INSTRUCTION VALUE SELECTION APPARATUS, INSTRUCTION VALUE SELECTION METHOD, AND INSTRUCTION VALUE SELECTION PROGRAM**

(30) Priority: 18.09.2015 JP 2015185610
(71) Applicant: Kabushiki Kaisha Toshiba, Inc., Tokyo 105-8001 (JP); Toshiba Infrastructure Systems & Solutions Corporation, Kawasaki-shi, Kanagawa 212-8585 (JP)
(72) Inventor: AMAKI Satoru, Tokyo 105-8001 (JP); ENOHARA Takaaki, Tokyo 105-8001 (JP); HUANG Chingchun, Tokyo 105-8001 (JP); ASAKURA Hiraku, Tokyo 105-8001 (JP)
(74) Representative: Moreland, David
(86) International application number: PCT/JP2016/073984
(87) International publication number: WO 2017/047313

(57) **Abstract**

A lighting control system of an embodiment includes a sensor which acquires person information indicating presence or absence of a person, a plurality of instruction value calculators which calculate light modulation rate instruction values based on the person information acquired by the sensor, and an instruction value selector which selects any one of instruction values transmitted from the plurality of instruction value calculators.

## Description

### [Technical Field]

Embodiments of the present invention relate to a lighting control system, a lighting control apparatus, an instruction value selection apparatus, an instruction value selection method, and an instruction value selection program.

### [Background Art]

In office buildings, the presence or absence of an occupant is detected by a sensor installed in the vicinity of a luminaire and thus lighting or extinction of the luminaire is controlled, so that it is possible to save energy. Furthermore, there is a case where a singular instruction value calculator, which calculates a light modulation rate of the luminaire around the occupant to obtain optimal brightness as well as lighting or extinction, calculates and instructs an instruction value, thereby performing control with comfortableness as well as energy saving.

### [Citation List]

### [Patent Literature]

[Patent Literature 1]
Japanese Patent No. 4367050

### [Summary of the Invention]

### [Problem to Be Solved by the Invention]

An object of the present invention is to provide a lighting control system, a lighting control apparatus, an instruction value selection apparatus, an instruction value selection method, and an instruction value selection program capable of more advanced lighting control, by which processing results are properly used in accordance with circumstances by using a plurality of instruction value calculators that calculate light modulation rates.

### [Means to Solve the Problem]

A lighting control system of an embodiment includes a sensor which acquires person information indicating presence or absence of a person, a plurality of instruction value calculators which calculate light modulation rate instruction values on the basis of the person information acquired by the sensor, and an instruction value selector which selects any one of instruction values transmitted from the plurality of instruction value calculators.

### [Brief Description of Drawings]

Fig. 1 is a block diagram illustrating a control zone of a lighting control system and a configuration of a lighting control apparatus according to an embodiment of the present invention.
Fig. 2 is a block diagram illustrating an overall configuration of a lighting control system according to a first embodiment of the present invention.
Fig. 3 is a table illustrating instruction value data transmitted from an instruction value calculator for area control according to the first embodiment of the present invention.
Fig. 4 is an explanation diagram illustrating energy saving lighting control based on daylight utilization control.
Fig. 5 is an explanation diagram illustrating comfortable lighting control based on gradation control.
Fig. 6 is a table illustrating calculation criteria, the number of illuminators managed, and a calculation cycle for each type according to the first embodiment of the present invention.
Fig. 7 is a flowchart illustrating a basic instruction value selection process according to the first embodiment of the present invention.
Fig. 8 is a table illustrating an example of a selection criteria table for each time zone according to the first embodiment of the present invention.
Fig. 9 is a flowchart illustrating an instruction value selection process of performing time-based control according to the first embodiment of the present invention.
Fig. 10 is a flowchart illustrating an instruction value selection process of performing calendar-based control according to the first embodiment of the present invention.
Fig. 11 is a flowchart illustrating an instruction value selection process of performing control based on a disaster occurrence situation according to the first embodiment of the present invention.
Fig. 12 is a block diagram illustrating an overall configuration of a lighting control system according to a second embodiment of the present invention.
Fig. 13 is a table illustrating an example of a selection criteria table for each time zone according to the second embodiment of the present invention.
Fig. 14 is a block diagram illustrating an overall configuration of a lighting control system according to a third embodiment of the present invention.
Fig. 15 is a setting screen for instruction value selection according to the third embodiment of the present invention.

### [Description of Embodiments]

Hereinafter, a lighting control system of embodiments will be described with reference to the drawings.

### (First embodiment)

### (Configuration)

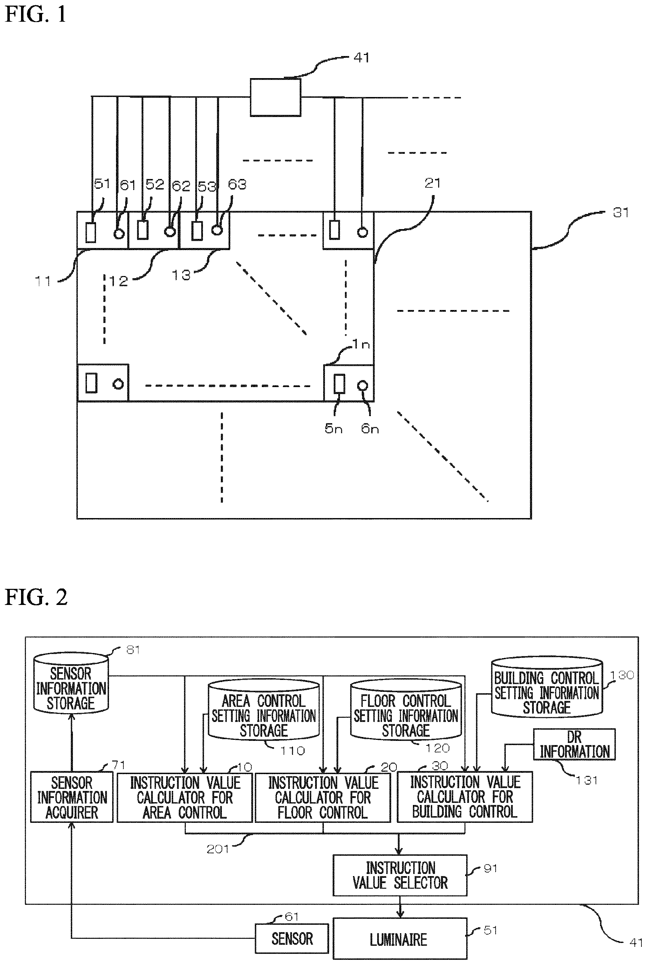

Fig. 1 is a block diagram illustrating a control zone of a lighting control system and a configuration of a lighting control apparatus according to an embodiment of the present invention.

There are a floor 21 to a floor 2n (not illustrated) in a building 31 and there are areas 11 to 1n on the floor 21. In the area 11, a luminaire 51 and a sensor 61 are installed. The luminaire 51 and the sensor 61, ... , the luminaire 5n and the sensor 6n are installed in each of the areas 11 to In. All the luminaires and the sensors are connected to a lighting control apparatus 41.

Fig. 2 is a block diagram illustrating an overall configuration of a lighting control system according to the embodiment of the present invention. Fig. 2 illustrates an internal system of the lighting control apparatus 41 of Fig. 1.

The luminaire 51 and the sensor 61 are connected to the lighting control apparatus 41. The lighting control apparatus 41 includes a sensor information acquirer 71, a sensor information storage 81, an instruction value calculator 10 for area control (a first instruction value calculator), an area control setting information storage 110, an instruction value calculator 20 for floor control (a second instruction value calculator), a floor control setting information storage 120, an instruction value calculator 30 for building control (a third instruction value calculator), a building control setting information storage 130, a DR information acquirer 131, and an instruction value selector 91.

It should be noted that although reference numerals for the luminaire 51 and the sensor 61 are shown for the purpose of convenience, the luminaires 51 to 5n and the sensors 61 to 6n are the same.

The luminaire 51 is an illuminator installed at a ceiling of an office building, and stepwise adjustment of its brightness is possible by instructing a light modulation rate as well as two states of lighting and extinction.

The sensor 61 is installed in the vicinity of the luminaire 51. The sensor 61 includes a combination of a plurality of sensors such as an infrared sensor, an illuminance sensor, and an image sensor and detects the presence or absence of an occupant and brightness information in the vicinity of the luminaire 51.

The sensor information acquirer 71 regularly acquires detection information from the sensor 61 and stores the measurement information in the sensor information storage 81. The measurement information of all the sensors 61 to 6n existing in the office building is collected and stored in the sensor information storage 81.

The area control setting information storage 110 holds setting information required when the instruction value calculator 10 for area control calculates an instruction value.

The instruction value calculator 10 for area control acquires the occupancy information and the brightness information in the vicinity of the luminaire 51 from the sensor information storage 81, and calculates a light modulation rate instruction value of the luminaire 51 from these types of information and the area control setting information storage 110.

The floor control setting information storage 120 holds setting information required when the instruction value calculator 20 for floor control calculates an instruction value.

The instruction value calculator 20 for floor control acquires occupancy information and brightness information on the entire floor 21 including the luminaires 51 to 5n from the sensor information storage 81, and calculates a light modulation rate instruction value of the luminaire 51 from these types of information and the floor control setting information storage 120.

The demand response information (DR information) acquirer 131 acquires suppress information on an illuminator from power suppress requests received from an upper system such as a community energy management system (CEMS) belonging to the office building.

The building control setting information storage 130 holds setting information required when the instruction value calculator 30 for building control calculates an instruction value.

The instruction value calculator 30 for building control acquires occupancy information and brightness information on the entire building including the luminaire 51 from the sensor information storage 81, and calculates a light modulation rate instruction value of the luminaire 51 from the suppress information acquired by the DR information acquirer 131 and the setting information held in the building control setting information storage 130. The instruction value calculator 30 for building control calculates a light modulation rate satisfying the power suppress requests acquired by the DR information acquirer 131 even when all luminaires in the building are turned on.

The number of layers of the instruction value calculator is three of an area, a floor, and a building in the present embodiment; however, it may be equal to or more than three by providing other instruction value calculators (for example, instruction value calculators for a corridor and a tenant). Furthermore, when a corridor and a tenant of the newly provided instruction value calculators are targets, a priority is fixed, so that it is possible to perform lighting control according to the targets.

The priority is a rate preferentially selected from a plurality of instruction value calculators. In the instruction value selector 91, a light modulation rate instruction value having a higher priority is generally selected.

The instruction value selector 91 selects an instruction value for the luminaire 51 by type information and various types of information transmitted from the instruction value calculator 10 for area control, the instruction value calculator 20 for floor control, and the instruction value calculator 30 for building control.

The instruction value of the light modulation rate and the like of the luminaire selected by the instruction value selector 91 is transmitted to the luminaire 51. The luminaire 51 having received the instruction value turns on the illuminator at the instructed light modulation rate.

In the present embodiment, the instruction value selector 91 is configured inside the lighting control apparatus 41; however, the instruction value selector 91 may be configured inside the luminaire 51 or may be configured with separate pieces of hardware positioned between the lighting control apparatus 41 and the luminaire 51. In this case, the instruction value calculator 10 for area control, the instruction value calculator 20 for floor control, the instruction value calculator 30 for building control, and the instruction value selector 91 are connected to one another by a communication line conforming to a predetermined communication standard. The predetermined communication standard, for example, includes BACnet (registered trademark), DALI, ZigBee (registered trademark), and ECHONET Lite (registered trademark), which are network communication standards for an intelligent building.

It is assumed that the instruction value calculators can be connected to or detached from a communication line conforming to a common communication standard at an arbitrary timing such as during building operation.

### (Operation)

Hereinafter, a method for selecting a type information-based instruction value of the instruction value calculator will be described. The type information indicates an area, a floor, and a building.

The area control setting information storage 110 holds "area" as the type information of the instruction value calculator 10 for area control. The "area" represents the vicinity of the luminaire 51 such as the area 11, and emphasizes that, when a person approaches the luminaire 51, the sensor 61 immediately and reliably detects the person. Therefore, in the instruction value calculator 10 for area control, energy saving and comfortableness are not important when responsiveness (immediately reacting) and availability (lighting as soon as possible) are employed as calculation criteria.

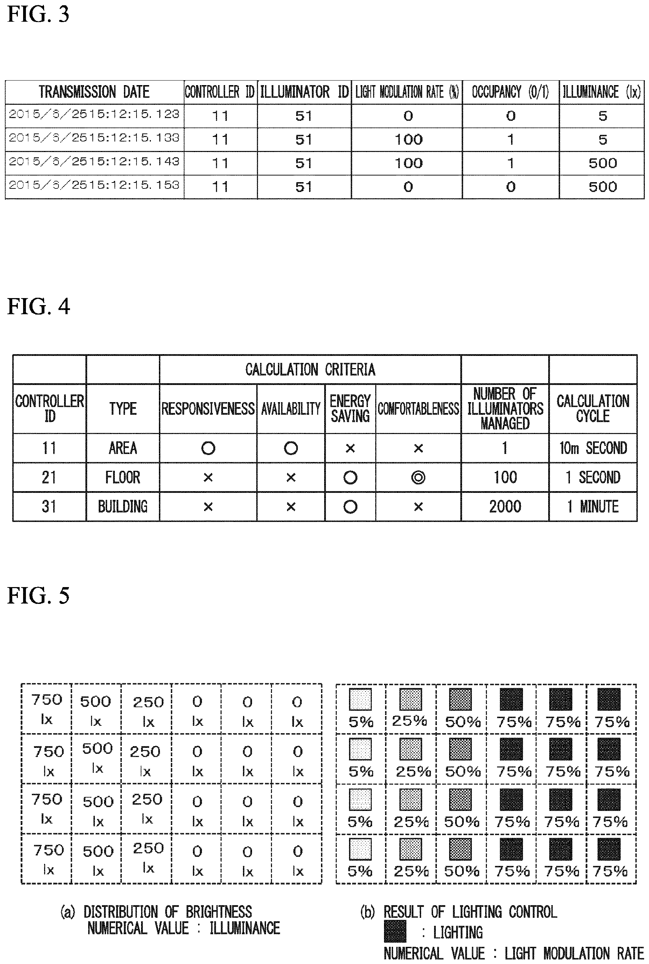

Fig. 3 illustrates instruction value data transmitted from the instruction value calculator 10 for area control. The instruction value calculator 10 for area control transmits data to the instruction value selector 91 every 10 milliseconds, and a light modulation rate of the transmission data is decided from presence and absence information.

The data transmitted from the instruction value calculator 10 for area control to the instruction value selector 91 may include or may not include the presence and absence information and illuminance information as illustrated in Fig. 3. When the data does not include the information, the instruction value selector determines the presence and absence information from a light modulation rate.

The floor control setting information storage 120 holds "floor" as the type information of the instruction value calculator 20 for floor control. The "floor" represents the same plane, on which the plurality of the luminaires 51 to 5n are adjacently installed, such as the floor 21. It is required to suppress wasted power and provide a comfortable work space such as when a person works for a long time around the luminaire. Therefore, in the instruction value calculator 20 for floor control, energy saving and comfortableness are employed as the calculation criteria.

As an instruction value calculation method having achieved the energy saving, for example, there is daylight utilization control as illustrated in Fig. 4. Fig. 4 illustrates that, in each area, a light modulation rate is controlled to be low (5%) on a side (750 lx) with high illuminance and a light modulation rate is controlled to be high (75%) on a side (0 lx) with low illuminance. Since the light modulation rate is controlled to be low on the side with high illuminance, it is possible to achieve the energy saving than usual.

As an instruction value calculation method having achieved the comfortableness, for example, there is gradation control as illustrated in Fig. 5. Fig. 5 illustrates that as well as controlling a light modulation rate of an area including a person to be high (75%), a light modulation rate of an area being in contact with the area including a person is also controlled to be slightly high (50%) and a light modulation rate of an area being in contact with the area is also controlled to be lower than the area having the light modulation rate (50%) but to be slightly high (25%), that is, the light modulation rate is stepwisely controlled. Since a light modulation rate of an area around the area including a person can also be controlled to be higher than usual, it is possible to achieve better comfortableness than usual.

The building control setting information storage 130 holds "building" as the type information of the instruction value calculator 30 for building control. The "building" represents an entire office building including the plurality of the luminaires 51 to 5n such as the building 31, and it is important that power energy is suppressed in the entire building. In the instruction value calculator 30 for building control, energy saving is employed as the calculation criteria.

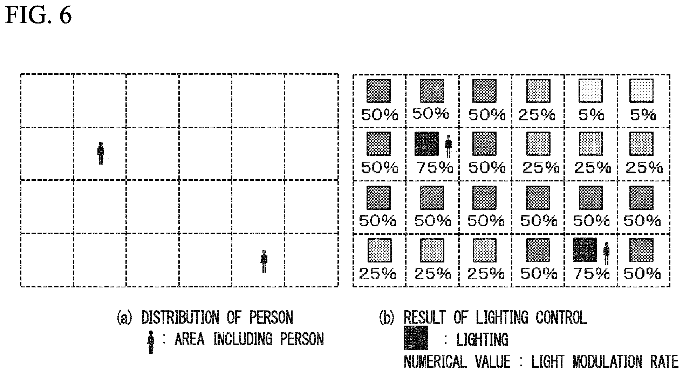

Fig. 6 is a table collectively illustrating the calculation criteria for each type. Fig. 6 illustrates the degree of importance of each type of the area, the floor, and the building with respect to the calculation criteria of responsiveness, availability, energy saving, and comfortableness by using C, B, and A. The degree of importance is set to be high in the order of A, B, and C.

Furthermore, Fig. 6 also illustrates the number of illuminators managed and a calculation cycle. When the number of illuminators required for calculation increases, since more time is required for collection of the sensor information storage 81, the calculation cycle becomes longer.

In normal building operation, since power suppress requests from a CEMS are prioritized, the instruction value for building control is preferentially selected. Next, since lighting control for both energy saving and comfortableness is required, the instruction value for floor control is preferentially selected. Finally, the instruction value for area control is selected.

However, as illustrated in Fig. 6, since the calculation cycle of the instruction value calculator 20 for floor control is slightly delayed with respect to that of the instruction value calculator 10 for area control, when a person approaches around the luminaire 51, turning-on of the illuminator is slightly delayed. Since this considerably degrades the comfortableness for a building resident, when occupancy information is changed from absence to presence due to the instruction value data transmitted from the instruction value calculator 10 for area control, the instruction value for area control is selected.

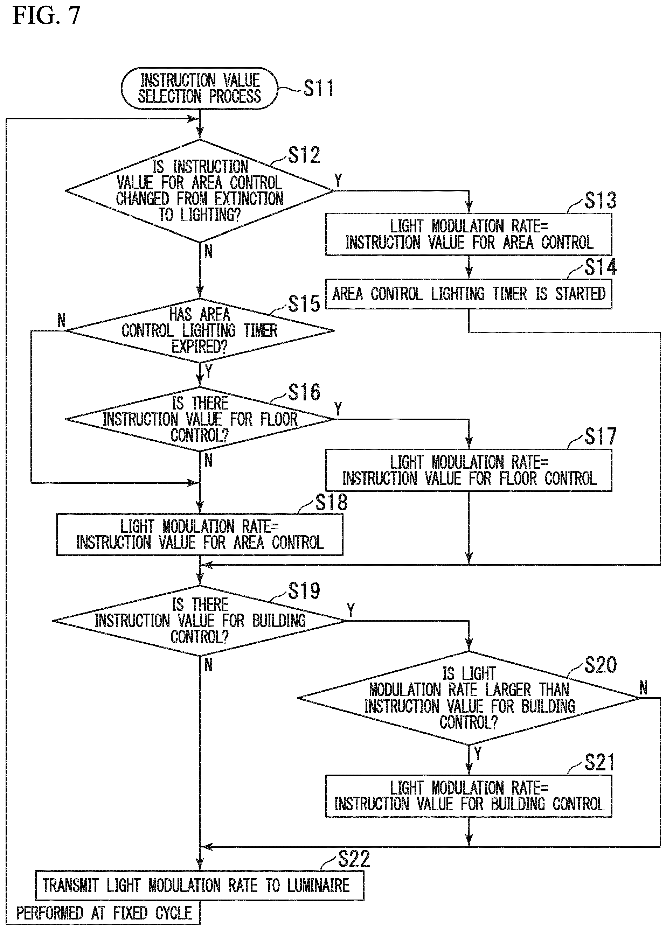

The selection of the instruction value of the light modulation rate as described above is performed by the instruction value selector 91. Fig. 7 is a flowchart illustrating a method in which the instruction value selector 91 selects the instruction value for area control, the instruction value for floor control, or the instruction value for building control by selection criteria. The selection criteria are references for firstly selecting the instruction value for area control, the instruction value for floor control, or the instruction value for building control.

### (Basic criteria)

The basic operation of the instruction value selector 91 will be described using Fig. 7 using separate cases. These are basic criteria of the selection criteria of the instruction value selector 91.

### (i) Case where instruction value for area control is changed from extinction to lighting

Firstly, in a case where the instruction value for area control is changed from extinction to lighting (Y in S12), a light modulation rate is assumed to be the instruction value for area control (S13). The change in the instruction value for area control from extinction to lighting, for example, corresponds to a change in the occupant information from 0 to 1 or a change in the light modulation rate instruction value transmitted from the instruction value calculator for area control from 0 to 100, in Fig. 3.

Next, an area control lighting timer is started (S14). This is for allowing lighting to be kept for a while after the lighting as an exceptional process of the area control.

### (i-1) Case where there is instruction value for building control

Thereafter, in a case where there is an instruction value for building control (Y in S19), when the light modulation rate (the instruction value for area control) is larger than the instruction value for building control (Y in S20), the light modulation rate is newly set to be the instruction value for building control (S21).

On the other hand, when the light modulation rate is smaller than the instruction value for building control (N in S20), the light modulation rate is the instruction value for area control as is.

### (i-2) Case where there is no instruction value for building control

Thereafter, in a case where there is no instruction value for building control (N in S19), the light modulation rate is the instruction value for area control as is.

### (ii) Case where instruction value for area control is not changed from extinction to lighting

Firstly, a case (N in S12) where the instruction value for area control is not changed from extinction to lighting corresponds to a case where the instruction value for area control is extinction, is lighting, or is changed from lighting to extinction.

In such a case (N in S12), when the area control lighting timer has expired (Y in S15), if there is an instruction value for floor control (Y in S23), the light modulation rate is set to be a new instruction value for floor control (S17).

On the other hand, when the area control lighting timer has not expired (N in S15) or when there is no instruction value for floor control (N in S16), the light modulation rate is set to be the instruction value for area control (S18).

The flow illustrates that the floor control is normally preferred and energy saving and comfortableness are important, in addition to the exceptional process of the area control.

### (ii-1) Case where there is instruction value for building control

Thereafter, in a case where there is an instruction value for building control (Y in S19), when the light modulation rate (the instruction value for area control or the instruction value for floor control) is larger than the instruction value for building control (Y in S20), the light modulation rate is newly set to be the instruction value for building control (S21).

On the other hand, when the light modulation rate is smaller than the instruction value for building control (N in S20), the light modulation rate is the instruction value for area control as is or the instruction value for floor control as is.

### (ii-2) Case where there is no instruction value for building control

Thereafter, in a case where there is no instruction value for building control (N in S19), the light modulation rate is the instruction value for area control as is or the instruction value for floor control as is.

The flow illustrates that when there is an instruction value for building control, the light modulation rate is assumed to be equal to or less than the instruction value for building control.

Then, the light modulation rates set in the respective cases are transmitted to the luminaire. The instruction value selector 91 performs the above operations at a fixed cycle.

However, the instruction value for area control, the instruction value for floor control, and the instruction value for building control are non-synchronously received in the present process.

Furthermore, in the instruction value selection process, the latest reception values are employed as respective instruction values.

### (Application criteria)

### (Instruction value selection process of performing time-based control)

Next, an example of performing time-based control will be described. This is one of application criteria of the selection criteria of the instruction value selector 91.

A case where the number of occupants is small and illuminators are mostly turned off in a time zone such as midnight or early morning is considered. In such a time zone, since safety is important and reliable lighting or extinction is preferred, the instruction value for area control is preferentially selected.

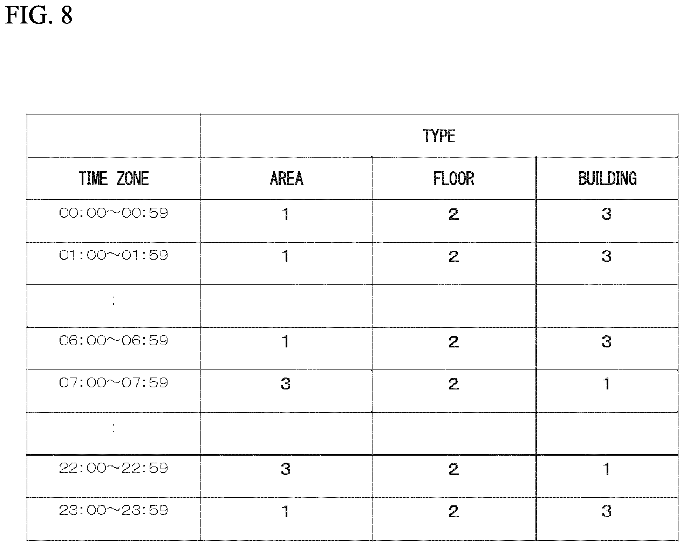

Fig. 8 illustrates an example of a selection criteria table for each time zone. Fig. 8 illustrates a reference for firstly selecting the instruction value for area control from 23:00 (midnight) to 6:59 (early morning). In other time zones other than this time zone, the instruction value for building control is firstly selected.

For example, when the selection criterion of the area is 1 and the selection criterion of the floor is 2, it can be said that a priority for area control is higher than a priority for floor control.

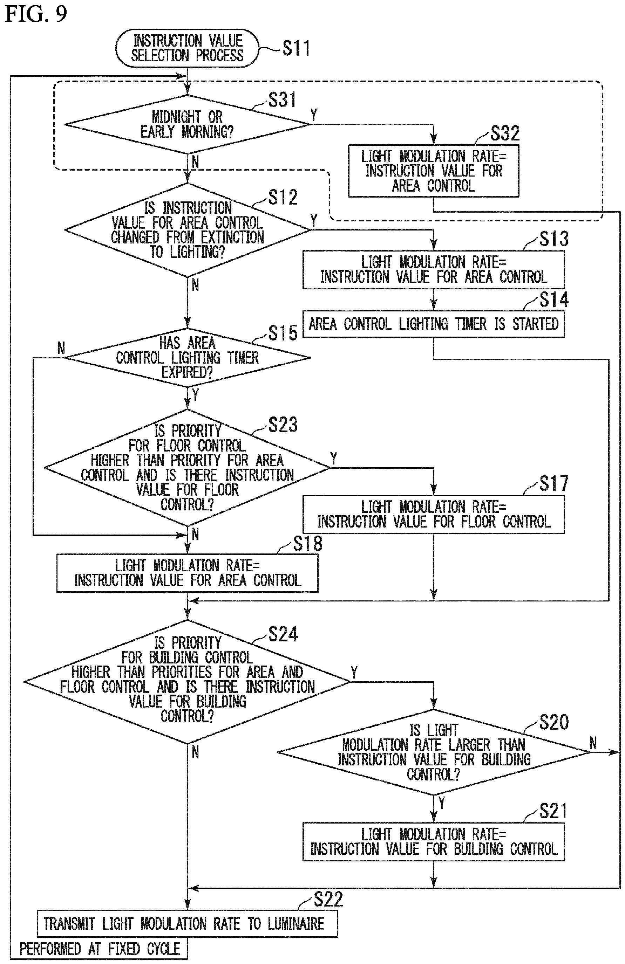

The instruction value selection process of performing the time-based control will be described using a flowchart of Fig. 9. Fig. 9 is different from the basic instruction value selection process of Fig. 7 in terms of a part surrounded by a dotted line and conditions of S23 and S24, and the other parts are the same as those of the flowchart of Fig. 7. The same reference numerals are used to designate the same parts.

When the time is midnight or early morning (Y in S31), the light modulation rate is assumed to be the instruction value for area control (S32). Then, the light modulation rate is transmitted to the luminaire.

On the other hand, when the time is neither midnight nor early morning (N in S31), the following case classification will be described.

### (i) Case where instruction value for area control is changed from extinction to lighting

Firstly, in a case where the instruction value for area control is changed from extinction to lighting (Y in S12), a light modulation rate is set to be the instruction value for area control (S13).

Next, the area control lighting timer is started (S14).

### (i-1) Case where priority for building control is higher than priority for area control and there is instruction value for building control

Thereafter, in a case where a priority for building control is higher than a priority for area control and there is an instruction value for building control (Y in S24), when the light modulation rate (the instruction value for area control) is larger than the instruction value for building control (Y in S20), the light modulation rate is newly set to be the instruction value for building control (S21).

On the other hand, when the light modulation rate is smaller than the instruction value for building control (N in S20), the light modulation rate is the instruction value for area control as is.

### (i-2) Case where priority for building control is not higher than priority for area control or there is no instruction value for building control

Thereafter, in a case where the priority for building control is not higher than the priority for area control or there is no instruction value for building control (N in S19), the light modulation rate is the instruction value for area control as is.

### (ii) Case where instruction value for area control is not changed from extinction to lighting

Firstly, in a case (N in S12) where the instruction value for area control is not changed from extinction to lighting, when the area control lighting timer has expired (Y in S15), if the priority for floor control is higher than the priority for area control and there is an instruction value for floor control (Y in S23), the light modulation rate is newly set to be the instruction value for floor control (S17).

On the other hand, when the area control lighting timer has not expired (N in S15), the light modulation rate is assumed to be the instruction value for area control (S18). Furthermore, when the priority for floor control is not higher than the priority for area control or when the light modulation rate is not the instruction value for floor control (N in S16), the light modulation rate is assumed to be the instruction value for area control (S18).

### (ii-1) Case where priority for building control is higher than priority for area control and there is instruction value for building control

Thereafter, in a case where the priority for building control is higher than the priority for area control and there is the instruction value for building control (Y in S24), when the light modulation rate (the instruction value for area control or the instruction value for floor control) is larger than the instruction value for building control (Y in S20), the light modulation rate is newly employed as the instruction value for building control (S21).

On the other hand, when the light modulation rate is smaller than the instruction value for building control (N in S20), the light modulation rate is the instruction value for area control as is or the instruction value for floor control as is.

### (ii-2) Case where priority for building control is not higher than priority for area control and there is no instruction value for building control

Thereafter, in a case where the priority for building control is not higher than the priority for area control or there is no instruction value for building control (N in S24), the light modulation rate is the instruction value for area control as is or the instruction value for floor control as is.

Then, the light modulation rates set in the respective cases are transmitted to the luminaire.

The instruction value selector 91 performs the above operations at a fixed cycle.

### (Instruction value selection process of performing calendar-based control)

Next, an example of performing calendar-based control will be described. This is one of the application criteria of the selection criteria of the instruction value selector 91.

There are many offices in which a building is not used on Saturdays and Sundays. When an office is not operating, since safety is important and reliable lighting or extinction is preferred, the instruction value for area control is preferentially selected. That is, the priority of the instruction value for area control is set to be highest.

As information on non-operation days, Saturday, Sunday, a national holiday and the like on a calendar may be used, or an operation day calendar of a building may be used. This calendar includes the information on non-operation days of the building.

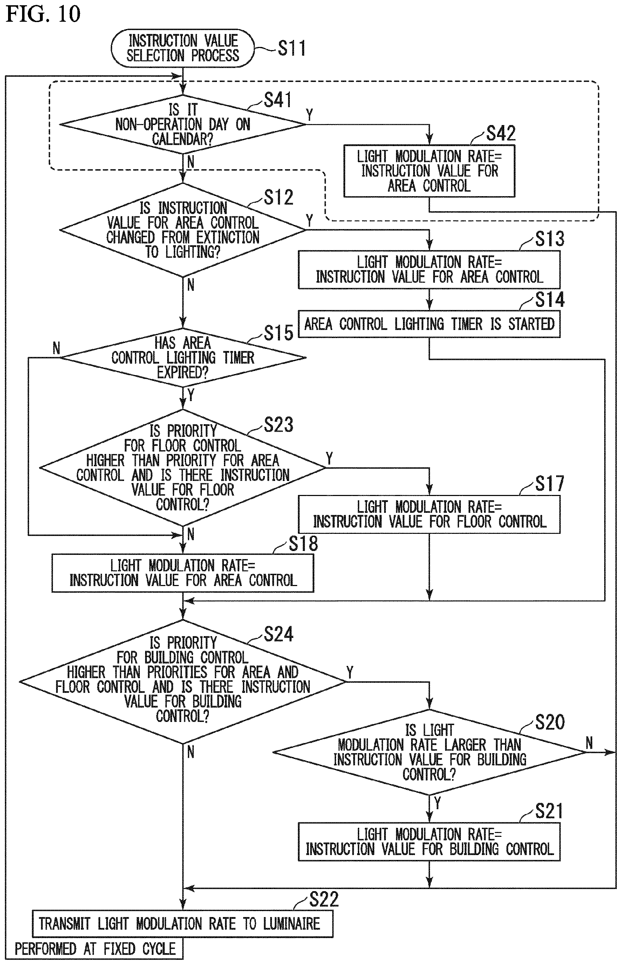

The instruction value selection process of performing the calendar-based control will be described using a flowchart of Fig. 10. Fig. 10 is different from the basic instruction value selection process of Fig. 9 in terms of a part surrounded by a dotted line. Since the other parts are the same as those of the flowchart of Fig. 9, the same reference numerals are used to designate the same parts and a detailed description thereof will be omitted.

When it is a non-operation day on the calendar (Y in S41), the light modulation rate is assumed to be the instruction value for area control (S42). Then, the light modulation rate is transmitted to the luminaire (S22).

On the other hand, when it is not a non-operation day on the calendar (N in S41), case classification steps S12 to S15, S17, S18, and S20 to S24 similar to the parts next to the part surrounded by the dotted line of Fig. 9 are performed.

### (Instruction value selection process of performing control based on disaster occurrence situation)

Finally, an example of performing control based on a disaster occurrence situation will be described. This is one of the application criteria of the selection criteria of the instruction value selector 91.

In a situation in which a disaster such as an earthquake, a typhoon, and a fire has occurred, since reliable lighting or extinction is preferred such that an office building user can reliably take refuge, the instruction value for area control is preferentially selected. That is, the priority of the instruction value for area control is set to be highest.

A disaster occurrence alarm may be acquired from the Internet and the like, or may also be acquired from a sensor such as a seismic intensity meter installed inside a building. Furthermore, report from a building resident using a disaster occurrence switch and the like installed inside the building may be used.

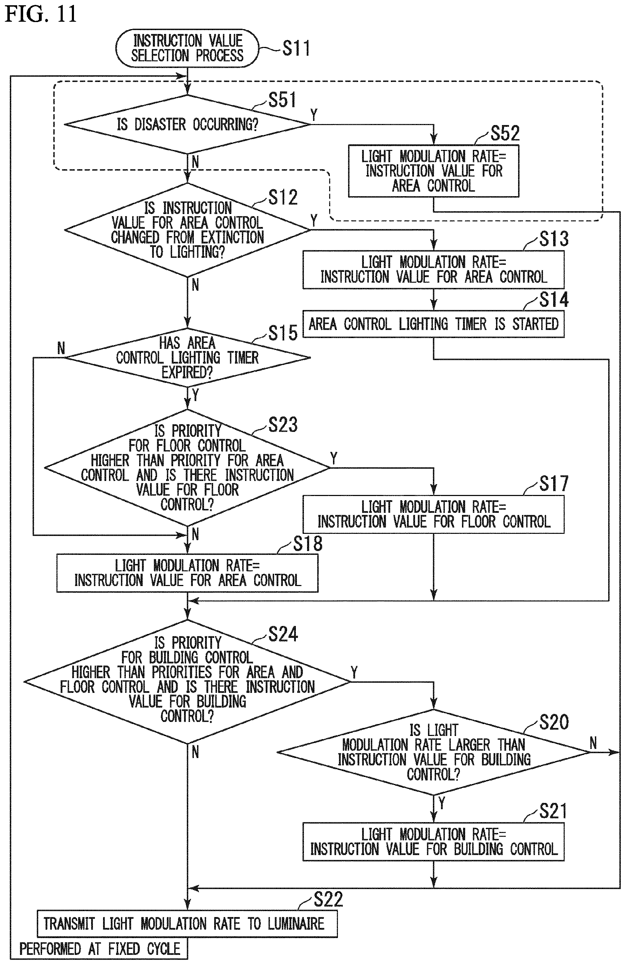

The instruction value selection process of performing the control based on a disaster occurrence situation will be described using a flowchart of Fig. 11. Fig. 11 is different from the flowchart of Fig. 9 in that a part surrounded by a dotted line is changed. Since the other parts are the same as those of the flowchart of Fig. 9, the same reference numerals are used to designate the same parts and a detailed description thereof will be omitted.

When disaster is occurring (Y in S51), the light modulation rate is assumed to be the instruction value for area control (S52). Then, the light modulation rate is transmitted to the luminaire. On the other hand, when disaster is not occurring (N in S51), case classification steps S12 to S15, S17, S18, and S20 to S24 similar to the parts except for the part surrounded by the dotted line of Fig. 9 are performed.

### (Effect)

By providing the instruction value selector 91, it is possible to properly use results of a plurality of instruction value calculators that perform instruction of light modulation rates. Furthermore, priorities are decided in accordance with all situations, so that it is possible to more flexibly use the results of the plurality of instruction value calculators. Therefore, it is possible to perform lighting control in which comfortableness is improved as well as energy saving.

Furthermore, when the instruction value selector 91 is configured in a separate lighting control apparatus or the luminaire 51 other than the lighting control apparatus 41, the instruction value calculators can be connected to or detached from a communication line conforming to a common communication standard at an arbitrary timing. Therefore, it is not necessary to fix an instruction value calculation method at the time of building completion. Accordingly, since an instruction value calculation method satisfying a new reference can be provided as a service even after the building completion, it becomes easy to meet customer's needs.

In addition, power consumption of an instruction value calculator, which has been determined not to be selected by the instruction value selector 91, may be suppressed. The instruction value selector 91 sends a power-off signal to the instruction value calculator. The instruction value calculator having received the signal controls its own power supply unit to enter a power off state or a stop state. When the selection criteria of the instruction value selector 91 are changed, the instruction value selector 91 sends a power-on signal to the instruction value calculator, thereby starting to operate the instruction value calculator again. In this way, energy consumption of the entire system is suppressed.

### (Second embodiment)

### (Configuration)

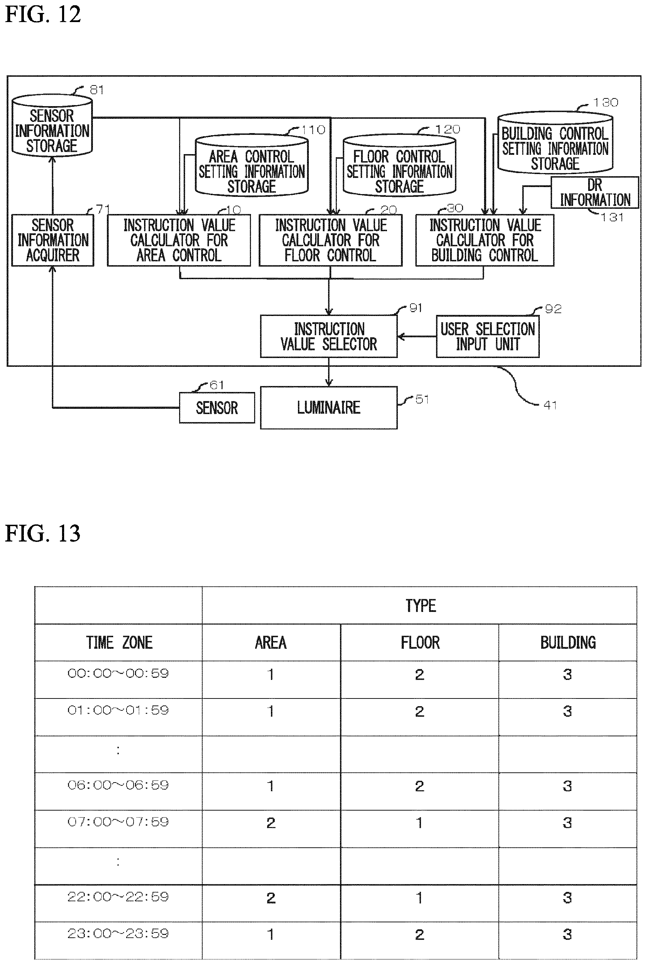

With reference to Fig. 12, a description will be provided for a lighting control system in which a user can change selection of instruction values of instruction value calculators. Fig. 12 is different from the block diagram of the lighting control system of Fig. 2 in that a user selection input unit 92 is provided, and since the other parts are the same as those of the block diagram of Fig. 2, the same reference numerals are used to designate the same parts and a detailed description thereof will be omitted.

The user selection input unit 92 transmits, to the instruction value selector 91, information on selection criteria input to the instruction value selector 91 for use. The selection criterion is set to be a user setting criterion.

An actual operation of the user selection input unit 92 is performed by a user interface (for example, a key input device, a monitor device and the like) provided in a device constituting the instruction value selector 91.

### (Operation)

When an instruction is input by a user via the user selection input unit 92, the lighting control system changes selection criteria to be used in the instruction value selector 91 to a use specification.

For example, in a case where a user of the luminaire 51 intends to exclude the luminaire 51 from a DR object, when an instruction is input by the user from the user selection input unit 92, the lighting control system changes a selection criteria table for each time zone as illustrated in Fig. 13. Fig. 13 illustrates that selection criteria of an instruction value for building control is the lowest in all time zones. In this way, the instruction value for building control has the lowest priority of the selection criteria, and can be excluded from DR-based power energy suppression objects.

### (Effect)

The user selection input unit 92 is provided such that the selection criteria to be used in the instruction value selector 91 can be changed, so that a certain luminaire can be excluded from the DR object for example.

### (Third embodiment)

### (Configuration)

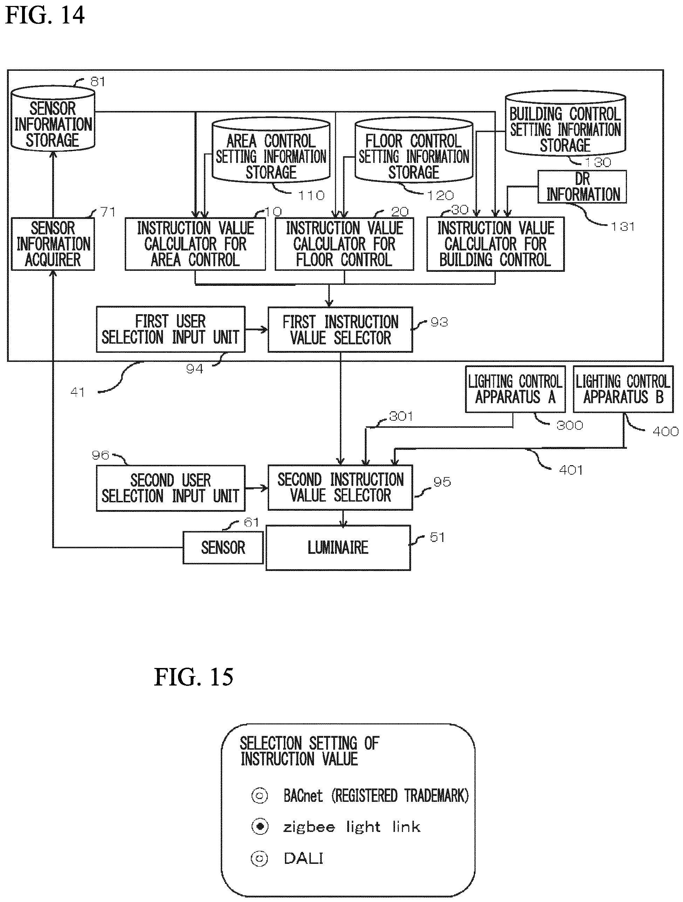

With reference to Fig. 14, a description will be provided for a lighting control system in which external lighting control apparatuses can be added. Fig. 14 is different from the block diagram of the lighting control system of Fig. 2 in that a first instruction value selector 93, a first user selection input unit 94, a second instruction value selector 95, a second user selection input unit 96, a lighting control apparatus A (300), a first communication line 301, a lighting control apparatus B (400), and a second communication line 401 are provided, and since the other parts are the same as those of the block diagram of Fig. 2, the same reference numerals are used to designate the same parts and a detailed description thereof will be omitted.

The lighting control apparatus A (300) is an independent lighting control apparatus connected by the first communication line 301.

The lighting control apparatus B (400) is an independent lighting control apparatus connected by the second communication line 401.

The first communication line 301 and the second communication line 401, for example, use lighting control communication standards such as BACnet (registered trademark), DALI, ZigBee (registered trademark), and ECHONET Lite (registered trademark), which are network communication standards for an intelligent building.

The first instruction value selector 93 has a configuration similar to that of the instruction value selector 91 of Fig. 2, and the first user selection input unit 94 has a configuration similar to that of the user selection input unit 92 of Fig. 12.

The second instruction value selector 95 acquires information on light modulation rate instruction values from the first instruction value selector 93, the lighting control apparatus A (300), and the lighting control apparatus B (400).

The second user selection input unit 96 transmits, to the second instruction value selector 95, information on selection criteria input to the second instruction value selector 95 for use.

An actual operation of the second user selection input unit 96 is performed by a user interface (for example, a key input device, a monitor device and the like) provided in a device constituting the second instruction value selector 95.

The number of the lighting control apparatuses is not limited to two as with the present example and can be equal to or more than two. Furthermore, the number of the lighting control apparatuses may be one.

### (Operation)

Normally, the internal communication line of the lighting control apparatus 41 and the first communication line 301/the second communication line 401 are different from each other in a communication standard. Therefore, it is difficult to additionally introduce the lighting control apparatus A (300) or the lighting control apparatus B (400) after building completion.

However, the second instruction value selector 95 is configured to select an instruction value from the first instruction value selector 93, an instruction value from the lighting control apparatus A (300), and an instruction value from the lighting control apparatus B (400), so that it is possible to add external lighting control apparatuses.

Fig. 15 illustrates an example of a setting screen for instruction value selection in the second user selection input unit 96.

For example, when the first instruction value selector 93 is positioned outside the lighting control apparatus 41, it is assumed that a communication line conforming to a standard (BACnet (registered trademark)) is used as a communication line for connecting each instruction value calculator to the first instruction value selector 93. Furthermore, it is assumed that a communication line conforming to a standard (Zigbee (registered trademark)) is used as the first communication line 301 and a communication line conforming to a standard (DALI) is used as the second communication line 401. In this case, when a light modulation rate in the lighting control apparatus A (300) is desired to be selected, the Zigbee (registered trademark) is selected and set as illustrated in Fig. 15.

The second instruction value selector 95 selects an instruction value, which is to be transmitted to the luminaire 51, according to the setting in the second user selection input unit 96.

### (Effect)

The second instruction value selector 95 is configured to select an instruction value from the first instruction value selector 93, an instruction value from the lighting control apparatus A (300), and an instruction value from the lighting control apparatus B (400), so that it is possible to add external lighting control apparatuses. Therefore, it is possible to provide flexible lighting control in an office building, so that it becomes easy to meet customer's needs.

## Claims

1. A lighting control system comprising:
a sensor which acquires person information indicating presence or absence of a person;
a plurality of instruction value calculators which calculate light modulation rate instruction values on the basis of the person information acquired by the sensor; and
an instruction value selector which selects any one of instruction values transmitted from the plurality of instruction value calculators.

2. The lighting control system according to claim 1, wherein the instruction value selector selects any one of the instruction values on the basis of a basic reference decided in advance from instruction values received in each lighting control apparatus having the plurality of instruction value calculators.

3. The lighting control system according to claim 1 or 2, wherein the plurality of instruction value calculators include a first instruction value calculator and a second instruction value calculator, and a control range of the second instruction value calculator is wider than a control range of the first instruction value calculator.

4. The lighting control system according to any one of claims 1 to 3, wherein when a light modulation rate instruction value of the first instruction value calculator is increased, the instruction value selector preferentially selects the light modulation rate instruction value of the first instruction value calculator than a light modulation rate instruction value of the second instruction value calculator.

5. The lighting control system according to any one of claims 1 to 4, wherein the instruction value selector selects any one of the instruction values on the basis of a reference decided using a time, a calendar, or a disaster occurrence situation among instruction values received in each lighting control apparatus having the plurality of instruction value calculators.

6. The lighting control system according to any one of claims 1 to 5, wherein the instruction value selector selects any one of the instruction values on the basis of a reference set by a user from instruction values received in each lighting control apparatus having the plurality of instruction value calculators.

7. The lighting control system according to any one of claims 1 to 6, wherein the plurality of instruction value calculators include a third instruction value calculator that calculates a light modulation rate instruction value on the basis of demand response information.

8. The lighting control system according to any one of claims 1 to 7, wherein the instruction value selector suppresses power consumption of an instruction value calculator, which calculates an unselected instruction value, among the plurality of instruction value calculators.

9. The lighting control system according to any one of claims 1 to 8, wherein the instruction value selector and the plurality of instruction value calculators communicate with each other by using different communication standards.

10. A lighting control system comprising:
a sensor which acquires person information indicating presence or absence of a person;
a plurality of instruction value calculators which calculate light modulation rate instruction values on the basis of the person information acquired by the sensor;
a first instruction value selector which selects any one of instruction values transmitted from the plurality of instruction value calculators; and
a second instruction value selector which selects any one of an instruction value transmitted from the first instruction value calculator and an instruction value transmitted from an external lighting control apparatus connected via a communication line.

11. A lighting control apparatus comprising:
a plurality of instruction value calculators which calculate light modulation rate instruction values based on person information acquired by a sensor and indicating presence or absence of a person; and
an instruction value selector which selects any one of instruction values transmitted from the plurality of instruction value calculators.

12. An instruction value selection apparatus which selects any one of instruction values on the basis of a basic reference decided in advance from instruction values received in each lighting control apparatus having a plurality of instruction value calculators which calculate light modulation rate instruction values in accordance with person information indicating presence or absence of a person.

13. An instruction value selection method comprising:
a step of receiving light modulation rate instruction values from each lighting control apparatus having a plurality of instruction value calculators which calculate light modulation rate instruction values in accordance with person information indicating presence or absence of a person; and
a step of selecting any one of the light modulation rate instruction values on the basis of a basic reference decided in advance among the light modulation rate instruction values.

14. An instruction value selection program causing an instruction value selection apparatus to perform:
a means of receiving light modulation rate instruction values from each lighting control apparatus having a plurality of instruction value calculators which calculate light modulation rate instruction values in accordance with person information indicating presence or absence of a person; and
a means of selecting any one of the light modulation rate instruction values on the basis of a basic reference decided in advance among the light modulation rate instruction values.
